# EUROPÄISCHE PATENTSCHRIFT

(11) **EP 1 590 641 B1**
(45) Veröffentlichungstag und Bekanntmachung des Hinweises auf die Patenterteilung: **22.09.2010**
(21) Anmeldenummer: 04708296.1
(22) Anmeldetag: 05.02.2004
(51) Int. Cl.: G01L 1/16, G01L 23/10, G01L 23/22, G01L 5/16

(54) **MESSSENSOR MIT VORSPANNVORRICHTUNG**
MEASURING SENSOR COMPRISING A PRE-STRESSING DEVICE
CAPTEUR DE MESURE AVEC DISPOSITIF DE PRECONTRAINTE

(30) Priorität: 05.02.2003 CH 174032003
(43) Veröffentlichungstag der Anmeldung: 02.11.2005
(73) Patentinhaber: Kistler Holding AG, 8408 Winterthur (CH)
(72) Erfinder: WOLFER, Peter, CH-8451 Kleinandelfingen (CH); LEHMANN, Andri, CH-8412 Aesch bei Neftenbach (CH); SCHAFFNER, Georges, CH-8335 Hittnau (CH)
(86) Internationale Anmeldenummer: PCT/CH2004/000064
(87) Internationale Veröffentlichungsnummer: WO 2004/070334

(56) Entgegenhaltungen:
- EP-A- 1 111 360
- CH-A- 587 475
- DE-A- 2 812 689
- DE-A- 19 960 325
- US-A- 3 269 175
- US-A- 4 075 525
- US-A- 4 392 082

## Beschreibung

Die Erfindung betrifft einen Messsensor unter Vorspannung zum Messen von Kräften und/oder Momenten.

Messsensoren werden unter anderem als lagerhaltige Maschinenelemente zum Einbau in Kraft und/oder Momente übertragende Maschinen- oder Vorrichtungsteile verwendet zum Messen von Kräften, Drücken, Beschleunigungen, Dehnungen und Momenten. Solche Messsensoren können piezoelektrisch, piezoresistiv, optisch, kapazitiv oder auf Basis von Dehnungsmessstreifen (DMS) sein. Im folgenden wird vorwiegend auf piezoelektrische Messsensoren eingegangen. Bei diesen werden beispielsweise geeignete Kristalle mit piezoelektrischen Eigenschaften in Form von dünnen Scheiben in einer Hülse zentriert eingelagert und unter einer Membrane, die eine gewünschte Vorspannung auf die Kristalle ausübt, eingeschweisst. Durch die Vorspannung wird einerseitso gewährleistet, dass im linearen Messbereich des Sensors gemessen wird. Andererseits wird dadurch auch beim Messen negativer Kräfte (Zugkräfte) oder Schwingungen ein Signal innerhalb des linearen Messbereiches des Sensors erzeugt.

Die Höhe der messbaren Zugkräfte ist jedoch zu niedrig für viele Anwendungen mit grossen Zugkräften und begrenzt durch die Zug-Belastbarkeit der Schweissung der Membrane an der Hülse des Sensors. Um grössere Zugkräfte oder Schubkräfte messen zu können, wird der Sensor zwischen zwei Adapterteilen mittels einer Zentrierhülse zentriert eingelagert und mittels einer geeigneten Verschraubung der Adapterteil unter eine zusätzliche Vorspannung gebracht. In der CH 587 475 ist eine solche Vorrichtung beschrieben.

Die hier als Stand der Technik beschriebene Anordnung weist gewisse Nachteile auf. Zum einen ist die Bauhöhe solcher Messanordnungen oft sehr hoch. Andererseits müssen zwei Zentrierungen (die der Kristalle im Sensor und die des Sensors in einem der Adapterteile) vorgenommen werden, die recht aufwändig sind.

Die Aufgabe der vorliegenden Erfindung ist es, einen Sensor und eine Messanordnung für gleichsam positive wie negative Kräfte, Drücke, Beschleunigungen, Dehnungen, Scherungen und/oder Momente anzugeben, die eine geringe Bauhöhe beanspruchen und in ihrem Aufbau eine einfache und kostengünstige Herstellung ermöglichen.

Diese Aufgabe wird erfindungsgemäss gelöst durch den kennzeichnenden Teil des Anspruchs 1.

Im Folgenden wird die Erfindung unter Bezug auf die Figuren näher beschrieben.

Es zeigen
- Fig. 1: den Stand der Technik eines Messsensors unter Vor- spannung, im Querschnitt dargestellt
- Fig. 2: eine erfindungsgemässe Ausführung eines Messsensors unter Vorspannung, im Querschnitt dargestellt
- Fig. 3a: ein weiteres Beispiel einer erfindungsgemässen Aus- führung eines Messsensors unter Vorspannung mit einem integrierten Verstärkermodul, im Querschnitt darge- stellt
- Fig. 3b: dasselbe Beispiel von Fig. 3a im A-A Schnitt darge- stellt
- Fig. 4: ein weiteres Beispiel einer erfindungsgemässen Aus- führung eines Messsensors unter Vorspannung mit einer alternativen Verbindungsvorrichtung der Adapterteile, im Querschnitt dargestellt
- Fig. 5: ein Verstärkermodul, in perspektivischer Darstellung
- Fig. 6: eine erfindungsgemässe Ausführung eines Messsensors unter Vorspannung mit einem daran angeschlossenen Verstärkermodul, im Schnitt dargestellt

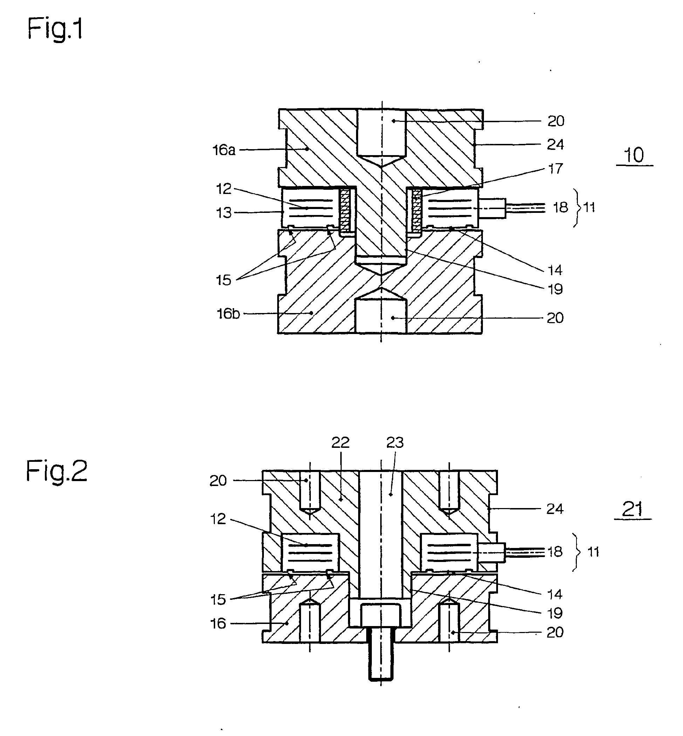

Fig. 1 zeigt einen Messsensor 10 unter Vorspannung als Stand der Technik. Der zentrale Teil wird durch einen Sensor 11 gebildet. Er enthält geeignete Kristalle 12 mit piezoelektrischen Eigenschaften, die in einer Hülse 13 zentriert eingelagert sind. Eine Membrane 14 deckt diese Kristallplatten ab. Sie ist unter Vorspannung durch Schweissstellen 15 an der Hülse 13 befestigt. An der Hülse 13 befindet sich auch ein geeigneter Verbindungsstecker 18, an der das von den Kristallen 12 erzeugte Signal weitergeleitet und analysiert werden kann.
Zwischen zwei Adapterteilen 16a und 16b wird der Sensor 11 mittels einer Zentrierhülse 17 zentriert eingelagert und mittels einer geeigneten Verbindungsvorrichtung 19, die an den Adapterteilen 16 angebracht ist, unter eine zusätzliche Vorspannung gebracht. Diese Adapterteile 16 weisen geeignete Befestigungsvorrichtungen 20 zu den zu messenden, unter Druck und Zug stehenden Komponenten oder Bauteilen (nicht in den Zeichnungen dargestellt) auf. Zusätzlich können die Adapterteile 16 über geeignete Angriffsvorrichtungen 24 für Werkzeuge verfügen, beispielsweise über eine teilweise flache oder sechskantige Ausgestaltung des Randes, die eine Krafteinwirkung mittels eines Werkzeuges, beispielsweise eines Sechskantschlüssels, ermöglichen.

Die Fig. 2 zeigt ein Beispiel einer möglichen erfindungsgemässen Ausführung 21 eines Messsensors. In dieser Ausführung 21 ist ein Sensor 11 in einer Adapterhülse 22 integriert, indem die Messkristalle 12 in der Adapterhülse 22 zentriert eingelagert und unter einer Membrane 14 abgedeckt sind. Diese Membrane 14 ist unter Vorspannung mittels Verschweissungen 15 an der Adapterhülse 22 befestigt.

Die Adapterhülse 22 ist massiv ausgestaltet und vereint erfindungsgemäss alle Funktionen der Hülse 13, des Adapterteiles 16a und der Zentrierhülse 17 in einem einzigen Teil. Durch die Vereinung der drei Teile (13, 16a, 17) entfällt die Zentrierung des Sensors 11 in einem Adapterteil. Mittels der Verbindungsvorrichtung 19, die vorzugsweise in ein Schraubgewinde ausgestaltet ist, wird das Adapterteil 16 an der Adapterhülse 22 befestigt und der Sensor 11 dadurch unter Vorspannung versetzt.

Die Adapterhülse 22 weist einen Verbindungsstecker 18 für die Signalübertragung auf sowie eine Befestigungsvorrichtung 20 für die Montage zu einer der unter Druck und Zug stehenden Komponenten (nicht in den Zeichnungen dargestellt) und verfügt über eine Angriffsvorrichtung 24 als Angriffsfläche für Werkzeuge wie unter Fig. 1 beschrieben.

Die hier beschriebene Befestigungsvorrichtung 20 kann aus einer oder mehreren, vorzugsweise aus drei Befestigungsstellen bestehen, die beispielsweise als Schraubbohrungen ausgestaltet und auf der Adapterhülse verteilt angeordnet sind. Durch die Verwendung mehrerer Befestigungsstellen können deren Dimensionen verringert werden, da sich die Kraft der unter Druck und Zug stehenden Komponenten auf die Anzahl Befestigungsstellen verteilt. Zudem bleibt die Mitte der erfindungsgemässen Anordnung 21 frei für eine durchgehende Montagebohrung 23, die ebenfalls zur Montage zu den unter Druck und Zug stehenden Komponenten verwendet werden kann. Dazu kann ein Vorsprung am Adapterteil 16 oder an der Adapterhülse 22 im Bereich der Montagebohrung 23 dienen, um beispielsweise eine Schraube zu halten. Diese Schraube kann mit einem geeigneten Werkzeug durch die Montagebohrung hindurch befestigt werden.

Durch die erfindungsgemässe Anordnung 21 der Befestigungsvorrichtung 20 kann die Höhe des nun einzigen Adapterteiles 16 wesentlich geringer ausgestaltet werden als das Adapterteil 16b der Fig. 1, da die Verbindungsvorrichtung 19 im Stand der Technik den zentralen Bereich der erfindungsgemässen Anordnung 21 beansprucht.

Ein weiterer Vorteil dieser Ausführung besteht darin, dass das Adapterteil 16 leicht durch ein anderes ausgetauscht werden kann, das eine für eine spezielle Anwendung passende Befestigungsvorrichtung 20 aufweist.

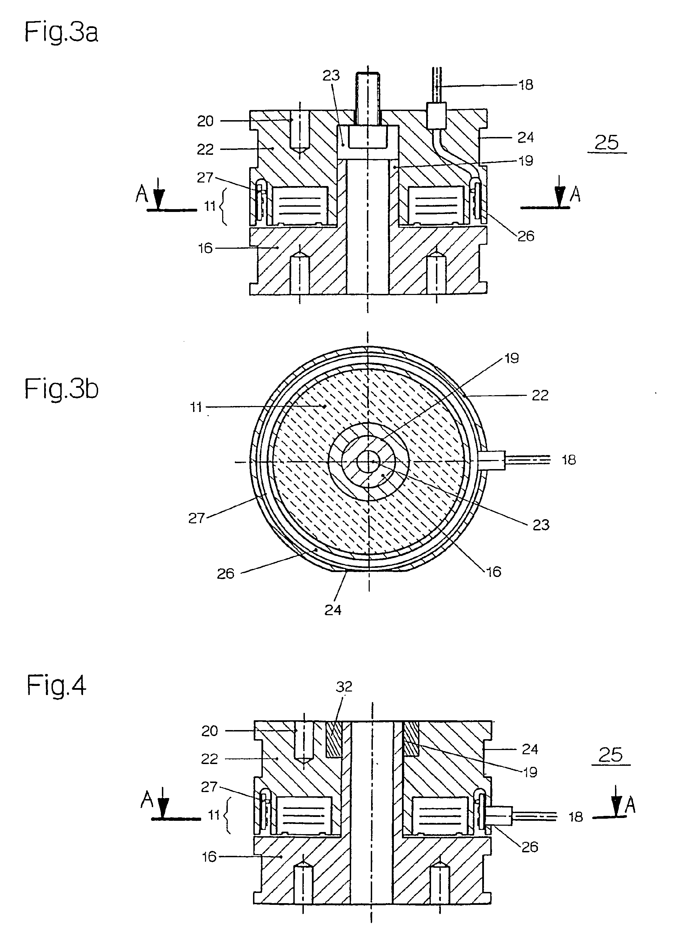

Fig. 3a stellt eine erfindungsgemässe Ausführung eines Messsensors mit integrierter Verstärkeranordnung dar. Fig. 3b zeigt dieselbe Anordnung im A-A Schnitt mit den selben Bezeichnungen.

Bei dieser Anordnung ist die Verbindungsvorrichtung 19 des Adapterteils 16 mit der Adapterhülse 22 in der Adapterhülse 22 angebracht, wogegen diese Verbindungsvorrichtung 19 in der Anordnung in der Fig. 2 inwändig des Adapterteils 16 angebracht ist. Alle anderen Merkmale der Fig. 2 sind gleichsam in der Fig. 3 enthalten und mit den selben Bezeichnungen versehen.

In der Fig. 4 ist eine alternative Ausführungsform zur Fig. 3a dargestellt. Die Verbindung zwischen Adapterhülse 22 und Adapterteil 16 kommt mittels indirekter Schraubverbindung unter Verwendung einer Mutter 32 zustande. Diese Mutter wird, während der Sensor unter die gewünschte Vorspannung gebracht ist, auf das Adapterteil angebracht und klemmt die Adapterhülse unter dieser Vorspannung fest. Dadurch behält die Adapterhülse 22 mit dem integrierten Sensor 11 die vordefinierte Vorspannung. Andere Möglichkeiten der Verbindung 19 wären das Verkeilen, Schweissen, Kleben oder ähnliches Arretieren von Adapterhülse 22 und Adapterteil 16 zueinander in vorgespanntem Zustand. Der Vorteil einer solchen Verbindung besteht darin, dass Adapterhülse 22 und Adapterteil 16 zueinander in vordefinierter Lage zueinander liegen. Dadurch kann beispielsweise gewährleistet werden, dass sich Bohrlöcher 20 als Befestigungsvorrichtungen zu Bauteilen jeweils gegenüberliegen.

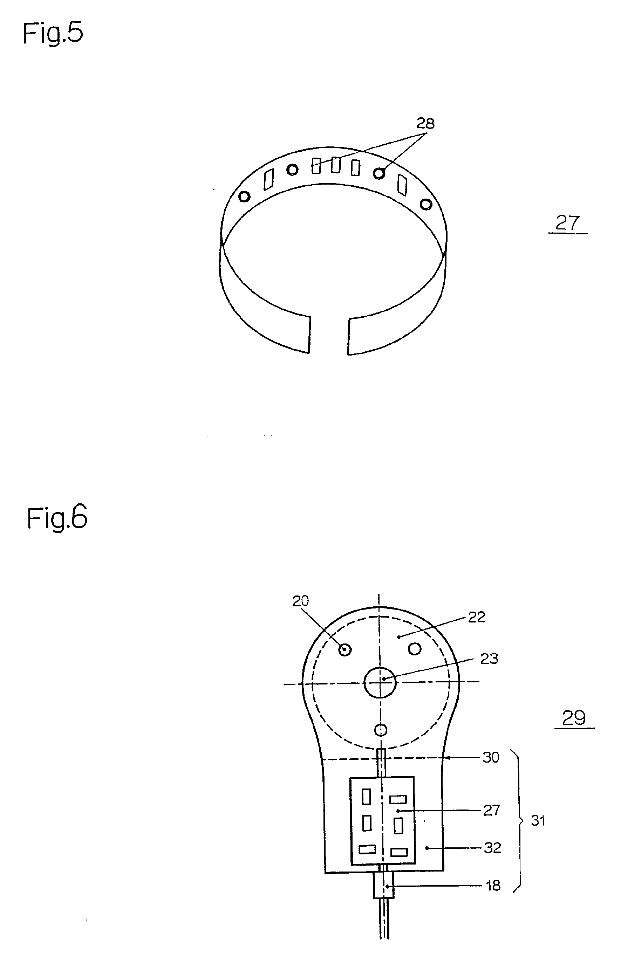

Zusätzlich ist in Fig. 3 eine Verstärkeranordnung 27 angebracht. Fig. 5 zeigt diese Verstärkeranordnung 27 als einzelnes Modul. In dieser Anordnung ist die Verstärkeranordnung 27 in Form eines offenen, flachen Ringes ausgestaltet und mit den für ein übliches Verstärkermodul notwendigen Elektronikkomponenten 28 ausgestattet.

Die Adapterhülse 22 der Fig. 3 oder Fig. 4 weist erfindungsgemäss eine geeignete Aussparung 26 seitlich ausserhalb des integrierten Sensors 11 auf, in welche die Verstärkeranordnung 27 eingebracht werden kann. In dieser Anordnung werden verstärkte Signale zum Verbindungsstecker 18 weitergeleitet. Die Integration einer Verstärkeranordnung 27 ist auch in der Erfindungsgemässen Ausführung eines Messsensors 21 gleichsam möglich.

Weitere Ausgestaltungen und Modifikationen der hier beschriebenen erfinderischen Ausführungen sind je nach Vorliebe für die praktischen Anwendungen möglich. So kann beispielsweise der Verbindungsstecker 18 auf der Fläche, die im Kontakt mit der zu messenden Komponente ist, angebracht werden, wenn die Kabelführung in diese Richtung bevorzugt wird.

Insbesondere können solche Messsensoren piezoelektrisch, piezoresistiv, optisch, kapazitiv oder auf Basis von Dehnungsmessstreifen (DMS) sein.

Eine weitere erfinderische Ausgestaltung eines Messsensors 29 mit externer Verstärkeranordnung ist in Fig. 6 dargestellt. In dieser Ausführung ist das Verstärkergehäuse 31 mit einer Verstärkeranordnung 27 versehen. Dieses Verstärkergehäuse 31 kann an einer Verbindungsfläche 30 an der Adapterhülse 22 angebracht werden, wobei sowohl das Verstärkergehäuse 31 als auch die Adapterhülse 22 über zueinander passende Adapter verfügen. Das Verstärkergehäuse 31 kann insbesondere einen vorzugsweise standardisierten Adapter aufweisen, sodass es an beliebig verschiedene Messsensoren angekoppelt werden kann, die über einen dazu passenden Adapter verfügen. Insbesondere kann der Durchmesser solcher Sensoren kleiner, gleich gross oder grösser sein als die Länge der Verbindungsfläche 30.

Alternativ dazu kann die Adapterhülse 22 über ein integriertes Verstärkergehäuse 31 verfügen, in dem die Verstärkeranordnung 27 eingebracht sein kann. Durch die Integration der Adapterhülse 22 mit der Verstärkeranordnung 27 wird die Verbindungsfläche 31 hinfällig.

Auch diese Ausführung stellt einen Messsensor dar, der eine viel tiefere Gesamthöhe aufweist als ein Messsensor, der nach dem Stand der Technik gebaut ist.

Jeder der hier offenbarten erfinderischen Messsensoren 21, 25, 29 weist sich durch seine kompakte Bauweise und die dadurch kleine Höhe aus sowie durch die Möglichkeit zur einfachen und kostengünstigen Herstellung, da weniger Teile verwendet werden und nur eine einzige Zentrierung vorgenommen werden muss. Gleichsam lassen sich Verstärkermodule auf verschiedenste Weise in der Anordnung integrieren. Der Fachmann kann sich leicht weitere Ausführungen und Anordnungen ausdenken, jedenfalls entsprechend den Ansprüchen. Insbesondere sind sämtliche Kombinationen der Merkmale der einzelnen beschriebenen Ausführungsbeispiele ohne Schwierigkeiten zu überwinden einfach herzustellen.

### Liste der Bezeichnungen

- 10.: Messsensor als Stand der Technik
- 11.: Sensor
- 12.: Kristallscheiben (Piezokristall)
- 13.: Hülse
- 14.: Membrane
- 15.: Schweissstelle
- 16.: Adapterteile
- 17.: Zentrierhülse
- 18.: Verbindungsstecker
- 19.: Verbindungsvorrichtung der Adapterteile
- 20.: Befestigungsvorrichtung zu Komponenten, Bauteilen
- 21.: Erfindungsgemässe Ausführung eines Messsensors
- 22.: Adapterhülse
- 23.: Montagebohrung
- 24.: Einrichtung als Angriffsfläche für Werkzeuge
- 25.: Erfindungsgemässe Ausführung eines Messsensors mit interner Verstärkeranordnung
- 26.: Aussparung
- 27.: Verstärkeranordnung
- 28.: Elektronik Komponenten
- 29.: Erfindungsgemässe Ausführung eines Messsensors mit externer Verstärkeranordnung
- 30.: Verbindungsfläche
- 31.: Verstärkergehäuse
- 32.: Mutter

## Patentansprüche

1. Messsensor (21, 25, 29) unter Vorspannung zum Messen von Druck- und Zug-Kräften und/oder Momenten, umfassend eine den Sensor (11) umfassende Adapterhülse (22) und ein mit der Adapterhülse (22) verbindbares Adapterteil (16), wobei der Sensor (11) durch den Verbindungsvorgang der Adapterhülse (22) mit dem Adapterteil (16) unter Vorspannung gesetzt ist, **dadurch gekennzeichnet, dass** der Sensor (11) direkt in der Adapterhülse (22)zentriert eingelagert ist.

2. Messsensor nach Anspruch 1, **dadurch gekennzeichnet, dass** der Messsensor elektromechanisch, insbesondere piezoelektrisch ist.

3. Messsensor nach Anspruch 1 oder 2, **dadurch gekennzeichnet, dass** die Verbindung zwischen Adapterhülse (22) und Adapterteil (16) mittels direkter Verbindung (19), insbesondere mittels Schraubverbindung dieser Komponenten zustande kommt,

4. Messsensor nach Anspruch 1 oder 2, **dadurch gekennzeichnet, dass** die Verbindung zwischen Adapterhülse (22) und Adapterteil (16) mittels indirekter Verbindung, insbesondere unter Verwendung einer Mutter (32) zustande kommt.

5. Messsensor nach einem der Ansprüche 1 bis 4, **dadurch gekennzeichnet, dass** die Adapterhülse (22) und/oder das Adapterteil (16) über jeweils eine oder mehrere, vorzugsweise als Schraubgewinde ausgestaltete Befestigungsvorrichtungen (20) zu jeweils einem zu messenden Bauteil verfügt.

6. Messsensor nach einem der Ansprüche 1 bis 5, **gekennzeichnet durch** eine im Zentrum durchgehende Montagebohrung (23).

7. Messsensor nach einem der Ansprüche 1 bis 6, **gekennzeichnet durch** einen Verbindungsstecker (18) zur Übertragung von Messsignalen.

8. Messsensor nach einem der Ansprüche 1 bis 7, **dadurch gekennzeichnet, dass** die Adapterhülse (22) eine Verstärkeranordnung (27) umfasst.

9. Messsensor nach einem der Ansprüche 1 bis 8, **dadurch gekennzeichnet, dass** die Verstärkeranordnung (27) in einer dafür vorgesehenen Aussparung (26) integriert ist.

10. Messsensor nach einem der Ansprüche 1 bis 8, **dadurch gekennzeichnet, dass** die Verstärkeranordnung (27) in einem Verstärkergehäuse (31) eingebracht ist, das fest mit der Adapterhülse (22) verbunden ist.

11. Messsensor nach einem der Ansprüche 1 bis 8, **dadurch gekennzeichnet, dass** die Verstärkeranordnung (27) in einem Verstärkergehäuse (31) eingebracht ist, das lösbar mit der Adapterhülse (22) verbunden ist.

## Claims

1. A measurement sensor (21, 25, 29) under pre-load for the measurement of compression and tension forces and/or moments comprising an adapter sleeve (22) enclosing the sensor (11) and an adapter portion (16) that can be connected to the adapter sleeve (22) wherein the sensor (11) is put under pre-load by the process of connecting the adapter sleeve (22) to the adapter portion (16) **characterized in that** the sensor (11) is inserted directly in the adapter sleeve (22) in a centered manner.

2. A measurement sensor according to claim 1 **characterized in that** said measurement sensor is an electromechanical sensor, in particular a piezoelectric sensor.

3. A measurement sensor according to claim 1 or 2 **characterized in that** the connection between the adapter sleeve (22) and the adapter portion (16) is achieved by means of a direct connection (19), in particular by means of a screwed joint between these components.

4. A measurement sensor according to claim 1 or 2 **characterized in that** the connection between the adapter sleeve (22) and the adapter portion (16) is achieved by means of an indirect connection (19), in particular using a screw nut (32).

5. A measurement sensor according to any of the claims 1 to 4 **characterized in that** the adapter sleeve (22) and/or the adapter portion (16) is each assembled into an element to be measured by means of one or more fixation means (20) each of which is in the form of a screw thread.

6. A measurement sensor according to any of the claims 1 to 5 **characterized in** a mounting through hole (23) in the center.

7. A measurement sensor according to any of the claims 1 to 6 **characterized in** a connecting plug (18) for the transmission of measurement signals.

8. A measurement sensor according to any of the claims 1 to 7 **characterized in that** the adapter sleeve comprises an amplifier arrangement (27).

9. A measurement sensor according to any of the claims 1 to 8 **characterized in that** the amplifier arrangement (27) is integrated into a recess provided therefore.

10. A measurement sensor according to any of the claims 1 to 8 **characterized in that** the amplifier arrangement (27) is inserted in an amplifier housing (31) firmly connected to the adapter sleeve (22).

11. A measurement sensor according to any of the claims 1 to 8 **characterized in that** the amplifier arrangement (27) is inserted in an amplifier housing (31) detachably connected to the adapter sleeve (22).

## Revendications

1. Un capteur de mesure (21, 25, 29) sous une charge initiale pour la mesure des forces et/ou moments de compression et de traction comprenant une douille adaptatrice (22) entourant le capteur (11) et une pièce adaptatrice (16) connectable à la douille adaptatrice (22) dans lequel le capteur (11) est soumis à la charge initiale par le fait de la connexion de la douille adaptatrice (22) à la pièce adaptatrice (16) **caractérisé en ce que** le capteur (11) est inséré directement dans la douille adaptatrice (22) de manière centrée.

2. Un capteur de mesure selon la revendication 1 **caractérisé en ce que** ledit capter de mesure est un capteur électromécanique, notamment piézoélectrique.

3. Un capteur de mesure selon la revendication 1 ou 2 **caractérisé en ce que** la connexion entre la douille adaptatrice (22) et la pièce adaptatrice (16) est réalisée par l'intermédiaire d'une connexion directe (19), notamment par l'intermédiaire d'une raccord de vis entre ces composants.

4. Un capteur de mesure selon la revendication 1 ou 2 **caractérisé en ce que** la connexion entre la douille adaptatrice (22) et la pièce adaptatrice (16) est réalisée par l'intermédiaire d'une connexion indirect (19), notamment par l'utilisation d'un écrou (32).

5. Un capteur de mesure selon une des revendications 1 à 4 **caractérisé en ce que** la douille adaptatrice (22) et/ou la pièce adaptatrice (16) sont respectivement assemblées à un élément à mesurer par l'intermédiaire d'un ou plusieurs dispositifs de fixation (20) respectivement en forme d'un pas de vis.

6. Un capteur de mesure selon une des revendications 1 à 5 **caractérisé en** un alésage de montage (23) au centre.

7. Un capteur de mesure selon une des revendications 1 à 6 **caractérisé en** un connecteur (18) pour la transmission de signaux de mesure.

8. Un capteur de mesure selon une des revendications 1 à 7 **caractérisé en ce que** la douille adaptatrice comprend un arrangement d'amplificateur (27).

9. Un capteur de mesure selon une des revendications 1 à 8 **caractérisé en ce que** ledit arrangement d'amplificateur (27) est intégré dans un évidement prévu à cet effet.

10. Un capteur de mesure selon une des revendications 1 à 8 **caractérisé en ce que** l'arrangement d'amplificateur (27) est inséré dans un boîtier d'amplificateur (31) s'attachant à la douille adaptatrice (22).

11. Un capteur de mesure selon une des revendications 1 à 8 **caractérisé en ce que** l'arrangement d'amplificateur (27) est inséré dans un boîtier d'amplificateur (31) de manière amovible à la douille adaptatrice (22).
